# EUROPÄISCHE PATENTANMELDUNG

(11) **EP 0 608 718 A2**
(43) Veröffentlichungstag der Anmeldung: **03.08.1994**
(21) Anmeldenummer: 94100462.4
(22) Anmeldetag: 13.01.1994
(51) Int. Cl.: H04B 15/02, H05K 9/00

(54) **Einrichtung zum Reduzieren der Störstrahlung elektrischer Flachbaugruppen**

(30) Priorität: 27.01.1993 DE 4302205
(71) Anmelder: Siemens Nixdorf Informationssysteme Aktiengesellschaft, D-33102 Paderborn (DE)
(72) Erfinder: Zenkner, Heinz, D-86156 Augsburg (DE); Brantsch, Helmut, D-93055 Regensburg (DE)
(74) Vertreter: Fuchs, Franz-Josef, Dr.-Ing.

(57) **Zusammenfassung**

Zum Reduzieren der Störstrahlung elektrischer Flachbaugruppen (1) in derartige Flachbaugruppen aufweisenden Funktionseinheiten, in denen die elektrischen Flachbaugruppen (1) einschiebbar gehalten und über einen Anschlußwinkel (3) an einer in Einschieberichtung der elektrischen Flachbaugruppe (1) hinteren Stirnseite mit einem geerdeten Teil der elektrischen Funktionseinheit verbunden sind, ist an wenigstens einer Stelle im Bereich der Stirnseiten der elektrischen Flachbaugruppe (1) ein Teilbereich (4) einer Null-Volt-Lage der elektrischen Flachbaugruppe (1) offen angeordnet, dem eine elektrisch leitende, geerdete Gegenfläche der elektrischen Funktionseinheit zugeordnet ist, die in eingeschobener Stellung der elektrischen Flachbaugruppe (1) den offen angeordneten Teilbereich (4) der elektrischen Flachbaugruppe (1) kontaktiert.

## Beschreibung

Die Erfindung betrifft eine Einrichtung zum Reduzieren der Störstrahlung elektrischer Flachbaugruppen gemäß dem Oberbegriff des Anspruchs 1.

Elektrische Flachbaugruppen stellen in derartige Flachbaugruppen aufweisenden elektrischen Funktionseinheiten wegen ihres hochfrequenztechnisch ungünstigen Masseanschlusses und ihrer schnellen komplexen Bausteine eine störintensive Logik dar.

Der hochfrequenztechnisch ungünstige Masseanschluß basiert darauf, daß nur ein elektrisch leitender Anschlußwinkel, der an einer in eine Einschieberichtung der elektrischen Flachbaugruppe in die elektritsche Funktionseinheit hinteren Stirnseite der elektrischen Flachbaugruppe befestigt ist und einen Kontakt mit einer Null-Volt-Lage der elektrischen Flachbaugruppe hat, nach dem Einschieben der elektrischen Flachbaugruppe in die elektrische Funktionseinheit mit einem geerdeten Teil der elektrischen Funktionseinheit elektrisch leitend verbunden ist.

Zum Einschieben ist die elektrische Flachbaugruppe an gegenüberliegenden, bezogen auf die Einschieberichtung längs verlaufenden Stirnseiten über entsprechende Führungsschienen einschiebbar gehalten.

Um die Störstrahlung der elektrischen Flachbaugruppen zu reduzieren, werden heute zum Teil sehr teure schaltungstechnische Maßnahmen getroffen. Beispielsweise werden Filterschaltungen eingesetzt, die sehr aufwendig sind.

Aufgabe der Erfindung ist es daher, eine Reduzierung der Störstrahlung elektrischer Flachbaugruppen in derartige Flachbaugruppen aufweisenden elektrischen Funktionseinheiten mit einfacheren Mitteln und dadurch kostengünstiger zu bewerkstelligen.

Diese Aufgabe wird erfindungsgemäß durch die im Kennzeichen den Anspruchs 1 angegebenen Merkmale gelöst.

Danach erfolgt ein Masseanschluß der elektrischen Flachbaugruppe nicht nur über den Anschlußwinkel der elektrischen Flachbaugruppe sondern zusätzlich auch über wenigstens einen offen angeordneten Teilbereich einer Null-Volt-Lage der elektrischen Flachbaugruppe, dem eine geerdete Gegenfläche der elektrischen Funktionseinheit zugeordnet ist. Die Gegenfläche der elektrischen Funktionseinheit berührt dabei den offen angeordneten Teilbereich der elektrischen Flachbaugruppe, wenn sich die elektrische Flachbaugruppe in eingeschobener Stellung befindet. Der betreffende Teilbereich ist im Bereich der Stirnseiten der elektrischen Flachbaugruppe angeordnet, weil dann die Wirkung der Reduzierung der Störstrahlung am größten ist. Vorteilhaft dabei ist, daß die geerdete Gegenfläche der elektrischen Funktionseinheit sehr einfach beispielsweise durch eine elektrisch leitende Rückwand oder durch elektrisch leitende Halteelemente der elektrischen Flachbaugruppe realisiert werden kann.

Ein Vorsehen mehrerer oben erwähnter Teilbereiche ist beispielweise dann günstig, wenn die einzelnen Teilbereiche nicht breitflächig genug ausgebildet sind. Ein breitflächiger Masseanschluß kann dann dadurch gebildet werden, daß die einzelnen Teilbereiche beispielsweise punktförmig nebeneinander angeordnet werden.

Die Bewerkstelligung der offen angeordneten Teilbereiche der Null-Volt-Lage an den elektrischen Flachbaugruppen erfordert keinen besonderen Mehraufwand. Ferner können auch entsprechende elektrisch leitende, geerdete Gegenflächen an der elektrischen Funktionseinheit ohne besonderen Mehraufwand vorgesehen werden, falls es überhaupt notwendig ist, welche vorzusehen. Meist besteht die elektrische Funktionseinheit aus einem Metallgehäuse, so daß die elektrisch leitenden Gegenflächen ohnehin vorhanden sind. Insgesamt sind die Maßnahmen, um eine Reduzierung der Störstrahlung der elektrischen Flachbaugruppen in derartige Flachbaugruppen aufweisenden elektrischen Funktionseinheiten zu erhalten, gering und damit kostengünstig.

Die Reduzierung der Störstrahlung wird dadurch erzielt, daß sich durch einen zusätzlichen Masseanschluß am Rand der Flachbaugruppe eine Verschiebung der Resonanzfrequenz der Flachbaugruppe zu höheren Frequenzen hin ergibt. Die Wirksamkeit aller auf einer Flachbaugruppe vorhandenen Filtermaßnahmen werden verbessert.

Vorteilhafte Ausgestaltungen der Erfindung sind Gegenstand von Unteransprüchen.

Die Stirnseiten der elektrischen Flachbaugruppe können sehr gut zum Herstellen eines zusätzlichen Masseanschlusses benutzt werden, weil diese durch die Abmessungen der elektrischen Flachbaugruppe sehr einfach so angeordnet werden können, daß sie innerhalb von Führungsschienen an gegebenenfalls federnd angeordneten Führungsflächen schleifen oder auf eine elektrisch leitende Gegenwand der elektrischen Funktionseinheit drücken können.

Da Führungsschienen so ausgebildet sein können, daß sie die elektrischen Flachbaugruppen senkrecht zur Planebene der betreffenden elektrischen Flachbaugruppe spielfrei halten, indem gegebenenfalls federnd angeordnete Schenkel einer U-förmigen Führungsschiene auf die Boden- und Deckfläche der Trägerplatte der elektrischen Flachbaugruppe drücken, können auch diese Flächen sehr gut für einen zusätzlichen Masseanschluß verwendet werden.

Werden die Masseanschlüsse in der Weise vorgesehen, daß sie möglichst weit auseinander verteilt über der elektrischen Flachbaugruppe angeordnet sind, wird die vorteilhafte elektrische Wirkung besonders groß. Bei nur einem zusätzlichen Masseanschluß ist das beispielsweise dann der Fall, wenn der zusätzliche Masseanschluß an der in Einschieberichtung der bekannten elektrischen Flachbaugruppe vorderen Stirnseite vorgesehen ist.

Breitflächige Masseanschlüsse gewährleisten eine bestmögliche Wirkung der Reduzierung der Störstrahlung..

Besonders vorteilhaft ist, wenn ein Masseanschluß möglichst über den ganzen Umfang der elektrischen Flachbaugruppe gegeben ist.

Nachfolgend wird die Erfindung anhand einer Zeichnung näher erläutert.

Darin zeigen:
- Figur 1: ein erstes Ausführungsbeispiel der Erfindung,
- Figur 2: ein zweites Ausführungsbeispiel der Erfindung,
- Figur 3: ein Schaubild einer ersten Versuchsmessung, und
- Figur 4: ein Schaubild einer zweiten Versuchsmessung.

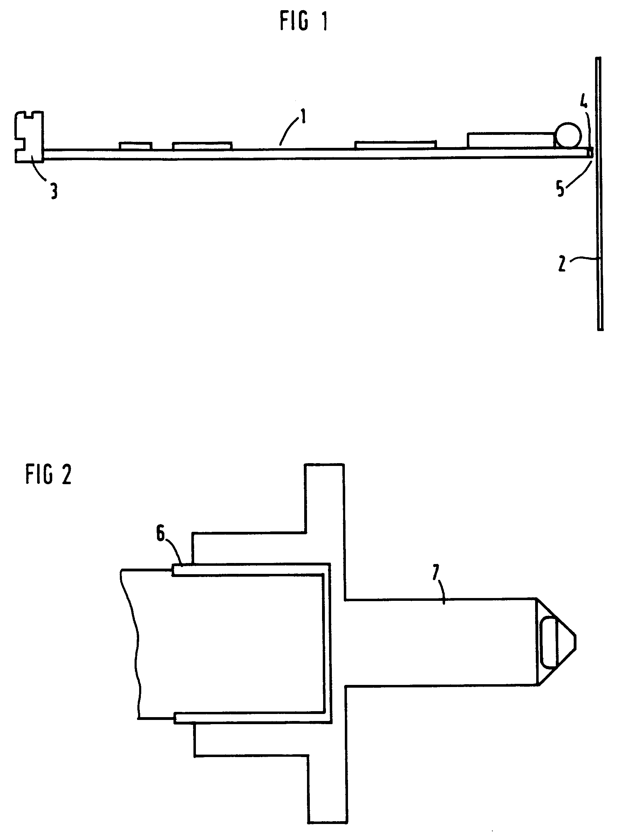

In der Figur 1 ist eine elektrische Flachbaugruppe 1 in der Seitenansicht dargestellt, auf der einige elektrische Bauelemente angeordnet sind. Ferner ist in der Figur 1 ein Stück Rückwand 2 einer elektrischen Funktionseinheit dargestellt, in die die elektrische Flachbaugruppe eingeschoben werden kann. Gemäß der Figur 1 verläuft die Einschieberichtung der elektrischen Flachbaugruppe 1 von links nach rechts. Die elektrische Flachbaugruppe 1 ist dabei kurz vor ihrer Endstellung gezeichnet.

Die Rückwand 2 der elektrischen Funktionseinheit ist elektrisch leitend ausgebildet. Sie ist ferner geerdet, d.h. mit einem Null-Volt-Potential beaufschlagt. In der Figur 1 sind die Erdungsmaßnahmen nicht extra gezeichnet.

Zur elektrischen Funktionseinheit gehören Führungsschienen, in denen die elektrische Flachbauruppe 1 einschiebbar gehalten ist. Die Führungsschienen sind der Übersichtlichkeit wegen an den gegenüberliegenden, bezogen auf die Einschieberichtung längs verlaufenden seitlichen Stirnseiten, von denen eine zu sehen ist, nicht gezeichnet.

Die elektrische Flachbaugruppe 1 weist bezogen auf die Einschieberichtung an einer hinteren Stirnseite einen elektrisch leitenden Anschlußwinkel 3 auf, der einen Kontakt mit einer Null-Volt-Lage der elektrischen Flachbaugruppe 1 hat. Der Anschlußwinkel 3 wird in eingeschobener Stellung der elektrischen Flachbaugruppe 1 mit einem elektrisch leitenden, geerdeten Rahmenteil der elektrischen Funktionseinheit verbunden und stellt damit einen Masseanschluß zwischen der elektrischen Flachbaugruppe 1 und der elektrischen Funktionseinheit her. Das elektrisch leitende, geerdete Rahmenteil ist in der Figur 1 der Übersichtlichkeit wegen ebenfalls nicht näher ausgeführt.

Die elektrische Flachbaugruppe 1 weist bezogen auf die Einschieberichtung vorderen Stirnseite einen elektrisch leitenden Teilbereich 4 auf, der mit der Null-Volt-Lage der elektrischen Flachbaugruppe 1 verbunden ist. Der elektrische Teilbereich 4 ist vorzugsweise über den gesamten Flächenbereich der vorderen Stirnseite der elektrischen Flachbaugruppe 1 ausgebildet. Andere Ausbildungen sind aber denkbar.

In eingeschobener Stellung der elektrischen Flachbaugruppe 1 berühren sich der elektrisch leitende Teilbereich 4 der elektrischen Flachbaugruppe 1 und die elektrisch leitende Rückwand 2 der elektrischen Funktionseinheit an einer Stelle 5 und bewerkstelligen einen weiteren Masseanschluß zwischen der elektrischen Flachbaugruppe 1 und der elektrischen Funktionseinheit.

Die Rückwand 2 der elektrischen Funktionseinheit kann unterschiedlich ausgebildet sein. Sie weist aber zumindest an der Stelle 5 eine elektrisch leitende Gegenfläche auf, über die der weitere Masseanschluß bewerkstelligt wird.

In der Figur 2 ist ein weiteres Ausführungsbeispiel der Ausgestaltung eines weiteren Masseanschlusses zwischen der elektrischen Flachbaugruppe 1 und der elektrischen Funktionseinheit dargestellt. Dabei ist der elektrisch leitende Teilbereich 4 an der Stirnseite der elektrischen Flachbaugruppe 1 über die an die Stirnseite angekanteten Planflächen der elektrischen Flachbaugruppe 1 zu einer vergrößerten Fläche 6 erweitert. Ferner ist die elektrisch leitende Gegenfläche der elektrischen Funktionseinheit als Teil einer elektrisch leitenden U-Schiene 7 ausgebildet, deren Innenflächen die vergrößerte Fläche 6 der elektrischen Flachbaugruppe 1 umschließen.

Die U-Schiene 7 kann als über Bolzen in Führungslöcher der elektrischen Funktionseinheit steckbares, elektrisch leitendes Einzelteil ausgebildet sein, das über eigene Berührungsflächen mit der elektrischen Funktionseinheit einen elektrisch leitenden Kontakt zwischen der elektrischen Flachbaugruppe 1 und der elektrischen Funktionseinheit herstellt. Die U-Schiene könnte aber auch unmittelbar aus der Rückwand der elektrischen Funktionseinheit herausgeprägt sein. Weitere Ausgestaltungsmöglichkeiten sind außerdem denkbar.

Der in der Figur 1 an der vorderen Stirnseite der elektrischen Flachbaugruppe 1 angeordnete elektrisch leitende Teilbereich 4, der gemäß der Figur 2 vergrößert sein kann, kann an weiteren Stellen am Umfang der elektrischen Flachbaugruppe im Bereich der Stirnseiten angeordnet sein. Als von der elektrischen Funktionseinheit geerdete Gegenflächen können die Berührungsflächen der Führungsschienen der elektrischen Flachbaugruppe 1 dienen. Insgesamt kann wenigstens nahezu über den ganzen Umfang der elektrischen Flachbaugruppe 1 ein zusätzlicher Massekontakt zwischen der elektrischen Flachbaugruppe 1 und der elektrischen Funktionseinheit vorgesehen sein..

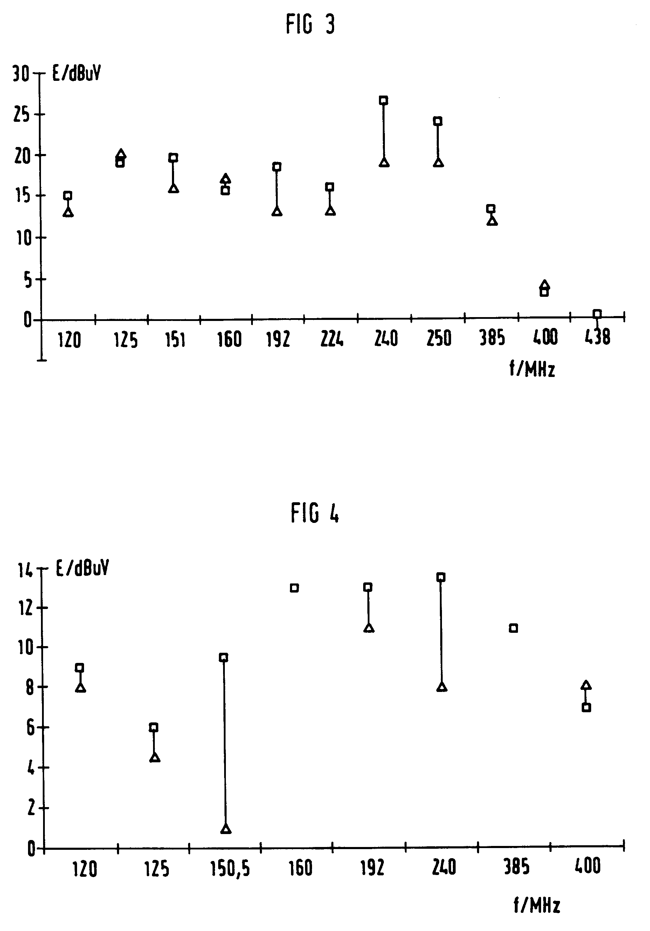

Der zusätzliche Masseanschluß reduziert den Grad der Störabstrahlung der elektrischen Flachbaugruppe 1 um bis zu 9dB, wie die Figuren 3 und 4 zeigen. Die Feldstärke konzentriert sich bei den Resonanzfrequenzen an den Rändern der elektrischen Flachbaugruppe 1, wodurch die Erdung an diesen Stellen besonders wirkungsvoll ist. Die Resonanzfrequenzen sind geometrieabhängig und werden durch gezielte Masseanschlüsse entsprechend verschoben. Aus den Figuren 3 und 4 ist die Wirkung dieser Verschiebung zu ersehen.

Die Figuren 3 und 4 zeigen in zwei Schaubildern die über einen zugehörigen kritischen Frequenzbereich einer verwendeten elektrischen Flachbaugruppe von beispielsweise 120 bis im wesentlichen 400 MHz in einem Freifeldversuch gemessene Störfeldstärke. Figur 3 zeigt die Meßwerte der Störfeldstärke in der Einheit E/dBuV in einem Abstand von 10m mit und ohne zusätzlichen Masseanschluß am offenen Gehäuse der elektrischen Funktionseinheit Die Figur 4 zeigt die entsprechenden Meßwerte in der gleichen Einheit an einem geschlossenen Gehäuse der elektrischen Funktionseinheit. Dabei bezeichnen die mit einem Dreieck gekennzeichneten Punkte die Meßwerte mit dem zusätzlichen Masseanschluß und die mit einem Quadrat gekennzeichneten Punkte die Meßwerte ohne dem zusätzlichen Masseanschluß.

## Patentansprüche

1. Einrichtung zum Reduzieren der Störstrahlung elektrischer Flachbaugruppen in derartige Flachbaugruppen aufweisenden elektrischen Funktionseinheiten, in denen eine elektrische Flachbaugruppe an gegenüberliegenden, bezogen auf eine zugehörige Einschieberichtung längs verlaufenden Stirnseiten einschiebbar gehalten und über einen elektrisch leitenden, an einer zur Einschieberichtung der elektrischen Flachbaugruppe hinteren Stirnseite befestigten Anschlußwinkel, der einen Kontakt mit einer Null-Volt-Lage der elektrischen Flachbaugruppe hat, mit einem geerdeten Teil der elektrischen Funktionseinheit elektrisch leitend verbunden ist,
**dadurch gekennzeichnet**,
daß an wenigstens einer Stelle im Bereich der Stirnseiten der elektrischen Flachbaugruppe (1) ein Teilbereich (4) der Null-Volt-Lage der elektrischen Flachbaugruppe (1) offen angeordnet ist, und daß die elektrische Funktionseinheit an einer dem offen angeordneten Teilbereich (4) der elektrischen Flachbaugruppe (1) in eingeschobener Stellung der elektrischen Flachbaugruppe (1) gegenüberliegenden Stelle unter Auflage auf den offen angeordneten Teilbereich (4) der elektrischen Flachbaugruppe (1) eine geerdete Gegenfläche aufweist.

2. Einrichtung nach Anspruch 1,
**dadurch gekennzeichnet,**
daß der offen angeordnete Teilbereich (4) der Null-Volt-Lage der elektrischen Flachbaugruppe (1) wenigstens an einer Stelle auf einem Flächenbereich der Stirnseite der elektrischen Flachbaugruppe (1) ausgebildet ist.

3. Einrichtung nach Anspruch 1 oder 2,
**dadurch gekennzeichnet,**
daß der offen angeordnete Teilbereich (4) der Null-Volt-Lage der elektrischen Flachbaugruppe (1) wenigstens an einer Stelle wenigstens auf einer der den Flächen der Strirnseiten angekanteten Planflächen der elektrischen Flachbaugruppe (1) ausgebildet ist.

4. Einrichtung nach einem der vorherigen Ansprüche,
**dadurch gekennzeichnet**,
daß der offen angeordnete Teilbereich (4) der Null-Volt-Lage der elektrischen Flachbaugruppe (1) wenigstens an einer Stelle im Bereich einer bezogen auf die Einschieberichtung der elektrischen Flachbaugruppe (1) vorderen Strirnseite der elektrischen Flachbaugruppe (1) ausgebildet ist.

5. Einrichtung nach einem der vorherigen Ansprüche,
**dadurch gekennzeichnet,**
daß der offen angeordnete Teilbereich (4) der Null-Volt-Lage der elektrischen Flachbaugruppe (1) breitflächig ausgebildet ist.

6. Einrichtung nach einem der vorherigen Ansprüche,
**dadurch gekennzeichnet,**
daß der offen angeordnete Teilbereich der Null-Volt-Lage der elektrischen Flachbaugruppe (1) einen äußeren Umfang der elektrischen Flachbaugruppe (1) wenigstens weitgehend umspannt.
